# EUROPÄISCHE PATENTSCHRIFT

(11) **EP 2 570 778 B1**
(45) Veröffentlichungstag und Bekanntmachung des Hinweises auf die Patenterteilung: **16.08.2017**
(21) Anmeldenummer: 12170997.6
(22) Anmeldetag: 06.06.2012
(51) Int. Cl.: G01D 5/347

(54) **ABTASTBAUGRUPPE EINES POSITIONSMESSSYSTEMS**
SAMPLING MODULE OF A POSITION MEASURING SYSTEM
MODULE D'EXPLORATION D'UN SYSTÈME DE MESURE DE POSITIONNEMENT

(30) Priorität: 14.09.2011 DE 102011082663
(43) Veröffentlichungstag der Anmeldung: 20.03.2013
(73) Patentinhaber: Dr. Johannes Heidenhain GmbH, 83301 Traunreut (DE)
(72) Erfinder: GRUBER, Alexander, 83368 St. Georgen (DE); DORMANN, Jens, 83365 Nußdorf/Sondermoning (DE); SCHINDLER, Mathias, 83101 Rohrdorf (DE)

(56) Entgegenhaltungen:
- DE-A1- 19 843 155
- US-A1- 2011 063 822

## Beschreibung

Die Erfindung betrifft eine Abtastbaugruppe eines Positionsmesssystems, zum Beispiel eines Längenmesssystems, nach dem Oberbegriff des Anspruchs 1.

Eine derartige Abtastbaugruppe umfasst eine Strahlungsquelle zur Erzeugung elektromagnetischer Strahlung, zum Beispiel in Form einer Leuchtdiode (LED), mittels der eine Maßverkörperung des Positionsmesssystems, zum Beispiel ein in Messrichtung (längs-)erstreckter, eine Messteilung aufweisender Maßstab, abtastbar ist; sowie einen Träger der Strahlungsquelle, an dem die Strahlungsquelle festlegbar ist und der elektrische Leiterelemente zur elektrischen Kontaktierung der Strahlungsquelle aufweist. Das heißt, durch die Festlegung der Strahlungsquelle an dem Träger wird diese einerseits in die Abtastbaugruppe integriert und innerhalb dieser fixiert sowie andererseits elektrisch angeschlossen, so dass die Strahlungsquelle zur Erzeugung elektromagnetischer Strahlung bestrombar ist. Hierzu weist die Strahlungsquelle elektrische Anschlusselemente auf, über die sie mit den Leiterelementen des Trägers in elektrischem Kontakt steht, wenn sie bestimmungsgemäß an dem Träger festgelegt ist.

Eine derartige Abtastbaugruppe ist üblicherweise als ein so genannter Abtastkopf ausgebildet, der durch (lichtelektrische) Abtastung einer zugehörigen Messteilung des Positionsmesssystems hochgenaue Positionsbestimmungen ermöglicht.

Die abzutastende Messteilung kann dabei beispielsweise zur Bildung eines so genannten Längenmesssystems an einem längserstreckten Maßstab vorgesehen sein oder sich zur Bildung eines Winkelmesssystems entlang einer Kreisbahn auf einer Teilscheibe oder auf dem Innen- bzw. Außenumfang einer Trommel erstrecken. Weiterhin kann die mittels der Abtastbaugruppe abzutastende Messteilung sowohl als eine inkrementale Teilung als auch als Absolut-Code ausgestaltet sein.

Eine Positionsmesseinrichtung mit einer Abtastbaugruppe der eingangs genannten Art in Form eines Abtast- bzw. Sensorkopfes ist aus der DE 198 43 155 A1 bekannt. Dieser Kopf ist als MID-Gerät ("Molded Interconnect Device"/geformtes Verbindungsgerät) mit einem Träger in Form eines Harzformblockes ausgebildet, der mit einen leitfähigen Film beschichtet ist, welcher derart strukturiert wurde, dass Verbindungsleitungen entstehen, die sich dreidimensional auf dem Block erstrecken. In einer Öffnung des Blockes ist eine LED eingebettet, die zur fotoelektrischen Abtastung eines dem Abtast- bzw. Sensorkopf zugeordneten Maßstabes dient und die über elektrische Anschlusselemente mit Verbindungsleitungen auf einer Oberfläche des Blockes verbunden ist.

Das von einer derartigen Strahlungsquelle, zum Beispiel in Form einer LED, ausgesandte Licht wird regelmäßig mittels einer Linse kollimiert und durchstrahlt sodann als paralleles Lichtbündel eine Abtastplatte, bevor es auf die abzutastende Messteilung trifft. Für die präzise Kollimation des von der Strahlungsquelle ausgesandten Lichtes ist die genaue Einstellung des Abstandes zwischen Strahlungsquelle und der zur Kollimation verwendeten Linse (Kondensorlinse) von Bedeutung.

Der Erfindung liegt das Problem zugrunde, eine Abtastbaugruppe der eingangs genannten Art zu schaffen, die mit einfachen Mitteln eine definierte Positionierung der Strahlungsquelle am zugehörigen Träger ermöglicht.

Dieses Problem wird erfindungsgemäß durch die Schaffung einer Abtastbaugruppe mit den Merkmalen des Anspruchs 1 gelöst.

Danach bilden die am Träger vorgesehenen Leiterelemente und die zugeordneten Anschlusselemente der Strahlungsquelle eine Führung, über die die Strahlungsquelle vor ihrer Festlegung an dem Träger (unter Beibehaltung des elektrischen Kontaktes zwischen der Strahlungsquelle und den trägerseitigen Leiterelementen) entlang einer Verstellbahn bezüglich des Trägers bewegbar ist, um die Strahlungsquelle an dem Träger in unterschiedlichen Positionen entlang der Verstellbahn anordnen zu können, in denen die Strahlungsquelle jeweils in elektrischem Kontakt mit den Leiterelementen des Trägers steht, also jeweils zur Erzeugung von Licht bestrombar ist.

Hierdurch kann die Strahlungsquelle gezielt so am Träger positioniert werden, dass sie einen bestimmten Abstand zu einer zugeordneten Linse und/oder Abtastplatte aufweist, wobei die Strahlungsquelle in der jeweils eingestellten Position elektrisch kontaktiert ist und somit bei einer Befestigung in der entsprechenden Position jeweils unmittelbar betriebsbereit ist.

Die Führung der Strahlungsquelle entlang der Verstellbahn muss dabei keineswegs ausschließlich mittels der durch die trägerseitigen elektrischen Leiterelemente und die strahlungsquellenseitigen elektrischen Anschlusselemente gebildeten Führung erfolgen. Vielmehr kann eine Führungsvorrichtung (zusätzlich) auch dadurch gebildet sein, dass die Strahlungsquelle mit ihrem Gehäuse in einer entsprechenden Aufnahme des Trägers definiert entlang einer Verstellbahn beweglich geführt ist. In einem solchen Fall kann sich die durch die Leiter- und Anschlusselemente gebildete (elektrische) Führung in ihrer Funktion gegebenenfalls darauf beschränken, während einer (durch die Aufnahme des Trägers vorgegebenen) Bewegung der Strahlungsquelle entlang der Verstellbahn den elektrischen Kontakt zwischen der Strahlungsquelle und den trägerseitigen Leiterelementen beizubehalten.

Gemäß einer Ausführungsform der Erfindung weist die durch die Leiterelemente und die zugehörigen Anschlusselemente gebildete Führung mindestens eine entlang der Verstellbahn erstreckte Leiterbahn und ein zugehöriges elektrisches Kontaktelement auf, die entlang jener Verstellbahn zueinander verschieblich sind und dabei in elektrischem Kontakt miteinander stehen, um die Strahlungsquelle in unterschiedlichen Relativpositionen bezüglich des Trägers jeweils elektrisch kontaktieren zu können. Insbesondere können hierbei zwei Leiterbahnen vorgesehen sein, denen jeweils ein Kontaktelement zugeordnet ist, da eine Strahlungsquelle regelmäßig über mindestens zwei elektrische Anschlüsse verfügt.

Hierbei kann die jeweilige Leiterbahn als elektrisches Leiterelement an dem Träger vorgesehen sein, während das jeweils zugehörige Kontaktelement als elektrisches Anschlusselement an der Strahlungsquelle angeordnet wird.

Die Führung kann für eine geradlinig geführte Bewegung der Strahlungsquelle ausgebildet sein, indem das mindestens eine Leiterelement und/oder das zugehörige Anschlusselement geradlinig erstreckt ist.

Die strahlungsquellenseitigen Anschlusselemente können durch von der Strahlungsquelle abstehende Anschlussbeine gebildet werden oder auch in anderer Weise ausgestattet sein, zum Beispiel als an einem Gehäuse der Strahlungsquelle verlaufende Anschlusselemente.

Konkrete Ausgestaltungen der trägerseitigen Leiterelemente und der zugehörigen strahlungsquellenseitigen Anschlusselemente werden weiter unten anhand der Figuren beschrieben werden.

Zur möglichen Festlegung der Strahlungsquelle an dem Träger in einer Mehrzahl unterschiedlicher Positionen, in denen die Strahlungsquelle jeweils in elektrischem Kontakt mit den trägerseitigen Leiterelementen steht, eignen sich insbesondere Befestigungsmethoden, die stufenlos oder kleinstufig in (nahezu) beliebigen Relativpositionen angewandt werden können, wie etwa das Löten, insbesondere Laserlöten, Kleben oder sonstige stoffschlüssige Verbindungen.

Die Verbindung zwischen Strahlungsquelle und Träger kann dabei einerseits zwischen den trägerseitigen Leiterelementen und den zugehörigen elektrischen Anschlusselementen und/oder andererseits zwischen dem Gehäuse der Strahlungsquelle und einer zugehörigen trägerseitigen Aufnahme erfolgen. Im erstgenannten Fall ist die Verwendung elektrisch leitender Verbindungsmittel, wie zum Beispiel eines elektrisch leitenden Klebers, zweckmäßig.

Die Abtastbaugruppe kann insbesondere als ein so genanntes MID-Gerät ("Molded Interconnect Device" bzw. geformtes Verbindungsgerät) ausgebildet sein, indem auf einem aus elektrisch isolierendem Material bestehenden Grundkörper des Trägers elektrische Leiterbahnen verlaufen, insbesondere in Form eines auf den Grundkörper des Trägers aufgebrachten Filmes, die der elektrischen Kontaktierung auf dem Träger angeordneter elektrischer Bauelemente, wie zum Beispiel der Strahlungsquelle, dienen.

Bei MID ist der spritzgießtechnisch hergestellte Träger aus Kunststoff z. B. selektiv mit elektrischen Leiterelementen versehen. Diese Leiterelemente können nach bekannten Herstellungsprozessen aufgebracht werden, wie beispielsweise durch Drucktechnik, Heißprägetechnik, LSA-Technik, Laserdirektstrukturierung und Zwei-Komponenten-Spritzgießverfahren.

Werden die Leiterelemente stromlos auf dem Träger abgeschieden, können diese in einem weiteren Verfahrensschritt durch einen galvanischen Abscheidungsprozess verstärkt werden.

Weitere Einzelheiten und Vorteile der Erfindung werden bei der nachfolgenden Beschreibung von Ausführungsbeispielen anhand der Figuren deutlich werden.

Es zeigen:
- Fig. 1A: ein Längenmesssystem bestehend aus einem Maßstab und einem Abtastkopf mit einer erfindungsgemäß ausgestalteten Abtastbaugruppe;
- Fig. 1B: einen Querschnitt A-A des Längenmesssystems gemäß Figur 1A;
- Fig. 2A: einen Träger der Abtastbaugruppe mit Leiterbahnen zur Kontaktierung auf dem Träger anzuordnender elektrischer Bauelemente;
- Fig. 2B: den Träger aus Figur 2A zusammen mit einer daran angeordneten und elektrisch kontaktierten Strahlungsquelle;
- Fig. 3: eine erste Abwandlung des Trägers aus Figur 2A;
- Fig. 4A: eine zweite Abwandlung des Trägers aus Fig. 2A;
- Fig. 4B: den Träger aus Figur 4A zusammen mit einer daran angeordneten und elektrisch kontaktierten Strahlungsquelle;
- Fig. 4C: die Abtastbaugruppe aus Figur 4B angeordnet auf einer Leiterplatte.

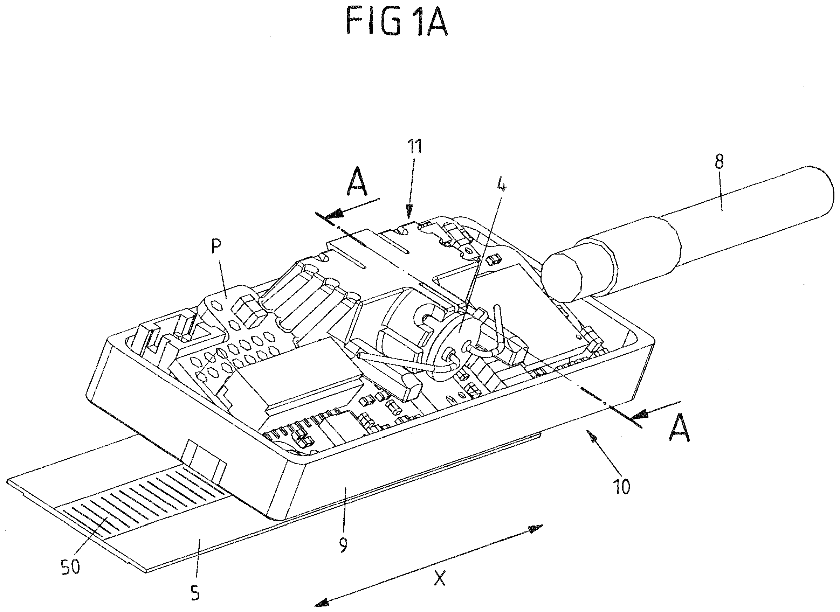

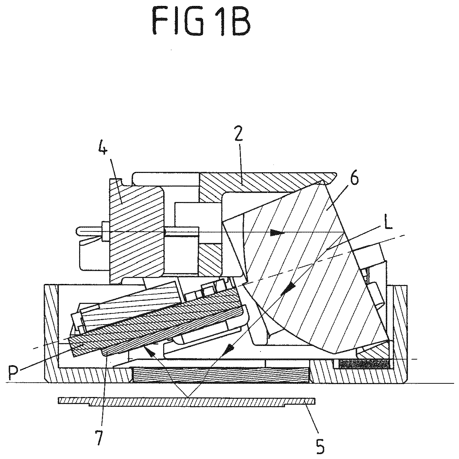

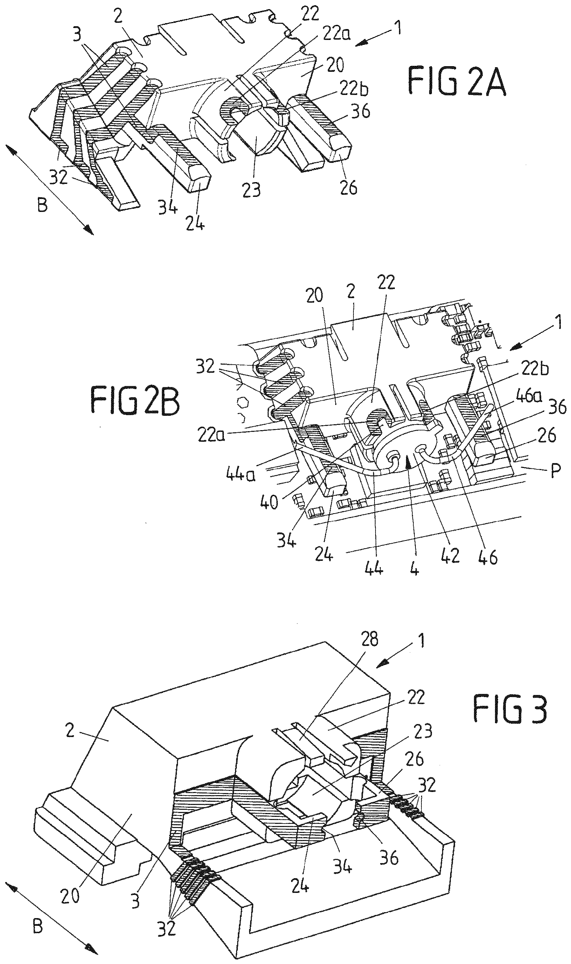

Die Figur 1A zeigt eine perspektivische Ansicht und Figur 1B einen Querschnitt A-A eines Positionsmesssystems in Form eines Längenmesssystems mit einem Abtastkopf 10 und einer hiermit abzutastenden Messteilung 50 (Maßverkörperung) eines Maßstabs 5. Das Längenmesssystem dient zur Messung der Position zweier zueinander beweglicher Messobjekte in Messrichtung X. Dabei wird der Abtastkopf 10 an einem dieser Messobjekte und der Maßstab 5 an dem anderen der beiden Messobjekte befestigt. Zur besseren Darstellung des Aufbaus des Abtastkopfes 10 ist in dieser Figur 1A nur der untere Teil des Gehäuses 9 dargestellt. Der Abtastkopf 10 weist eine Abtastbaugruppe 11 auf, welche einen Träger 1 mit einer daran positionierten und mechanisch festgelegten sowie elektrisch kontaktierten Strahlungsquelle 4 umfasst. Vorteilhafte Details und mögliche Ausgestaltungen dieser Abtastbaugruppe 11 werden nachfolgend anhand der weiteren Figuren 2A bis 4C näher erläutert.

Die Strahlungsquelle 4 sendet eine elektromagnetische Strahlung in Form von Lichtstrahlung ab, mit der die Messteilung 50 abtastbar ist. Der Verlauf eines Lichtstrahls L ist in Figur 1B dargestellt. Das bei der Positionsmessung von der Strahlungsquelle 4 ausgesendete Licht gelangt zu einer Linse 6, welche es formt, beispielweise kollimiert, und weiter auf die Messteilung 50 richtet. Der Lichtstrahl L wird von der Messteilung 50 abhängig von der Relativlage zwischen dem Abtastkopf 10 und dem Maßstab 5 moduliert und gelangt schließlich auf eine Detektoranordnung 7 zur Erzeugung von positionsabhängigen elektrischen Abtastsignalen. Die elektrischen Abtastsignale können über eine elektrische Leitung 8 zu einer Folgeelektronik übertragen werden.

Es werden nun anhand der Figuren 2A bis 4C drei unterschiedliche Ausführungsbeispiele einer Abtastbaugruppe 11 gezeigt, die zur Bildung des in den Figuren 1A und 1B schematisch dargestellten Abtastkopfes 10 dienen können, und zwar insbesondere diejenigen Komponenten eines Abtastkopfes 10, die der Aufnahme und Bestromung der Strahlungsquelle 4 dienen, mittels derer die zur Abtastung des zugeordneten Maßstabes 5 verwendete elektromagnetische Strahlung erzeugt wird.

Figur 2A zeigt einen Träger 1 einer derartigen Abtastbaugruppe, der einen aus einem elektrisch isolierenden Material, z. B. Kunststoff, bestehenden Grundkörper 2 umfasst, auf dem eine Mehrzahl (elektrisch leitfähiger) Leiterelemente in Form von (metallischen) Leiterbahnen 3 aufgebracht ist. Der Grundkörper 2 kann nach einem in der MID-Technik bekannten Verfahren mit den Leiterelementen versehen werden, beispielsweise durch Beschichten des Grundkörpers 2 mit einem elektrisch leitfähigen Film und ggf. Strukturierung des Films. Als Material für die Leiterelemente (Leiterbahnen 3) eignet sich z.B. Kupfer, Zinn, Blei oder Gold.

Der Grundkörper 2 des Trägers 1 umfasst einen Trägerbereich 20, von dem eine Aufnahme 22 absteht, die einen Aufnahmeraum 23 für die Strahlungsquelle 4, vgl. Figur 2B, definiert. Die Aufnahme 22, welche im Ausführungsbeispiel hohlzylindrisch ausgebildet ist, erstreckt sich entlang einer Bewegungsrichtung B, entlang welcher die zugehörige Strahlungsquelle 4 in die Aufnahme 22 einführbar ist. Hierzu ist die Strahlungsquelle 4 im Ausführungsbeispiel mit einem im Wesentlichen hohlzylindrischen Gehäuse 40, vgl. Figur 2B, versehen, so dass sie innerhalb des durch die Aufnahme 22 definierten Aufnahmeraumes 23 angeordnet werden kann und entlang der Erstreckungsrichtung der Aufnahme 22, welche im Ausführungsbeispiel mit der Zylinderachse zusammenfällt, entlang einer Bewegungsrichtung B bewegbar ist. Die Bewegungsrichtung B definiert somit eine Verstellbahn für mögliche Bewegungen der Strahlungsquelle 4 relativ zu dem Träger 1, welche allgemein sowohl einen (zumindest abschnittsweise) geradlinigen als auch einen gekrümmten Verlauf haben kann.

Gemäß einer Zusammenschau der Figuren 2A und 2B ist die Strahlungsquelle 4 in Form einer LED in der Aufnahme 22 des Trägers 1 derart entlang einer Richtung B, die im Ausführungsbeispiel entlang der Längsachse der hohlzylindrischen Aufnahme 22 verläuft, beweglich gelagert, dass die Strahlungsquelle 4, entlang der Bewegungsrichtung B betrachtet, in unterschiedlichen Positionen innerhalb der Aufnahme 22 bzw. des hierdurch gebildeten Aufnahmeraumes 23 anordenbar ist, je nachdem, wie tief die Strahlungsquelle 4 in die Aufnahme 22 bzw. in den Aufnahmeraum 23 eingeführt ist.

Die Aufnahme 22 bildet somit eine Führungsvorrichtung zur Führung der Strahlungsquelle 4 beim Einführen in den Aufnahmeraum 23 und auch bei einer Bewegung (Verschiebung) der Strahlungsquelle 4 im Aufnahmeraum 23, um die Strahlungsquelle 4, entlang der Bewegungsrichtung B, in einer definierten Position innerhalb des Aufnahmeraumes 23 anzuordnen. Die Aufnahme 22 ist im Ausführungsbeispiel geschlitzt ausgeführt, so dass sich mehrere durch Schlitze getrennte Teilbereiche (Backen) ausbilden, die bei eingesetzter Strahlungsquelle 4 eine radiale Vorspannung ausüben und die Strahlungsquelle 4 radial, d.h., in Richtungen senkrecht zur Bewegungsrichtung B, (möglichst spielfrei) klemmen und positionieren.

Die elektrische Kontaktierung der Strahlungsquelle 4 an dem Träger 1 wird durch die genannte MID-Technologie erleichtert, indem an dem aus einem isolierenden Material, insbesondere Kunststoff, bestehenden Grundkörper 2 des Träger 1 Leiterbahnen 3, z. B. in Form filmartiger Beschichtungen, vorgesehen sind. Diese bilden im Ausführungsbeispiel einerseits Anschlussbereiche 32, über die die aus dem Träger 1 und der Strahlungsquelle 4 bestehende Baugruppe mit den Leiterbahnen einer Leiterplatte P elektrisch kontaktierbar ist. Weiterhin bilden die trägerseitigen Leiterbahnen 3 Verbindungsbereiche 34, 36 zur elektrischen Kontaktierung der Strahlungsquelle 4.

Die Leiterbahnen, welche jene Verbindungsbereiche 34, 36 bilden, verlaufen im Ausführungsbeispiel der Figuren 1A und 1B auf Vorsprüngen 24, 26 des Trägers 1, die sich beidseits der Aufnahme 22 erstrecken, und zwar vorliegend entlang der Bewegungsrichtung B, entlang welcher die Strahlungsquelle 4 in die Aufnahme 22 einführbar und innerhalb des Aufnahmeraumes 23 verschiebbar ist.

Zur elektrischen Kontaktierung mit den Leiterbahnen 3 des Trägers 1, insbesondere den hierfür vorgesehenen Verbindungsbereichen 34, 36 der Leiterbahnen 3, weist die Strahlungsquelle 4 als Kontaktelemente dienende Anschlusselemente 44, 46 auf. Diese stehen im Ausführungsbeispiel von der Rückseite 42 des Gehäuses 40 der Strahlungsquelle 4 ab; d. h., von derjenigen Seite 42 der Strahlungsquelle 4, die beim bestimmungsgemäßen Einführen der Strahlungsquelle 4 in die Aufnahme 22 von dem Aufnahmeraum 23 weg weist.

Die Anschlusselemente 44, 46 sind als (stiftartige) Anschlussbeine ausgeführt, welche derart umgebogen bzw. abgewickelt sind, dass Abschnitte 44A, 46A der Anschlusselemente 44, 46 die Verbindungsbereiche 34, 36 der Leiterbahnen 3 kreuzen und dabei auf diesen aufliegen. Hierdurch bilden die Verbindungsbereiche 34, 36 der Leiterbahnen 3 und die Anschlusselemente 44, 46 der Strahlungsquelle 4 eine Führung, konkret im Ausführungsbeispiel eine Längsführung, welche eine Verschiebung der Anschlusselemente 44, 46 auf den Verbindungsbereichen 34, 36 der Leiterbahnen 3 gestattet, während die Anschlusselemente 44, 46 fortdauernd mit den Leiterbahnen 34, 36 in elektrischem Kontakt stehen.

Somit kann bei einer Einstellung der Position der Strahlungsquelle 4 innerhalb der Aufnahme 22 bzw. des Aufnahmeraumes 23 der elektrische Kontakt zwischen der Strahlungsquelle und den Leiterbahnen 3 des Trägers 1 und hierüber auch mit den elektrischen Schaltungen auf der zugehörigen Leiterplatte P aufrechterhalten werden.

Durch Bewegen bzw. Verschieben der Strahlungsquelle 4 innerhalb der Aufnahme 22 des Trägers 1 kann die Position der Strahlungsquelle 4 in dem Aufnahmeraum 23 so eingestellt werden, dass bestimmte, vorgegebene Abstände zu weiteren Funktionselementen der Abtastbaugruppe erreicht werden, wie etwa ein bestimmter Abstand der Strahlungsquelle 4 von einer zugehörigen Linsenanordnung (Kondensorlinse), die der Parallelisierung (Kollimation) von der Strahlungsquelle 4 im Betrieb ausgesandten Lichtes dient. Ergänzend oder alternativ kann beispielweise auch ein bestimmter Abstand der Strahlungsquelle 4 von einer zugeordneten Abtastplatte eingestellt werden. Die elektrische Kontaktierung der Strahlungsquelle 4 über die Anschlusselemente 44, 46 und die (entlang der Bewegungsrichtung B erstreckten) Verbindungsbereiche 34, 36 der trägerseitigen Leiterbahnen 3 stellt dabei sicher, dass in jeder gewählten Position der Strahlungsquelle 4 der gewünschte elektrische Kontakt besteht, um die Strahlungsquelle 4 mit elektrischer Energie versorgen zu können.

Zur Fixierung der Strahlungsquelle 4 in einer gewünschten Position innerhalb der Aufnahme 22 kann zum einen eine Festlegung der elektrischen Anschlusselemente 44, 46 an den Leiterbahnen 3 bzw. deren Verbindungsbereichen 34, 36 erfolgen, z. B. durch Löten, insbesondere Laserlöten, oder Kleben (mittels eines elektrisch leitenden Klebers). Grundsätzlich sind hierfür beliebige Verbindungsverfahren geeignet, die eine möglichst stufenlose oder geringstufige Festlegung der Anschlusselemente 44, 46 an den Verbindungsbereichen 34, 36 der Leiterbahnen 3 ermöglichen.

Zusätzlich oder alternativ kann die Strahlungsquelle auch dadurch in der Aufnahme 22 fixiert werden, dass deren Gehäuse 40 an der Wand der Aufnahme 22 festgelegt wird. Hierzu sind in der Wand der Aufnahme 22 Befestigungsbereiche 22A, 22B in Form von Ausnehmungen vorgesehen, deren Rand im Ausführungsbeispiel mit einem metallischen Material beschichtet ist. Auch hier können unterschiedliche Verbindungsverfahren zum Einsatz kommen, bevorzugt wiederum möglichst stufenlose bzw. kleinstufige Verbindungsmethoden, wie z. B. das Löten (Laserlöten) oder Kleben sowie sonstige stoffschlüssige Verbindungen.

Figur 3 zeigt eine Abwandlung des Trägers 2 aus Figur 2A mit einem elektrisch isolierenden Grundkörper 2, auf dem wiederum Leiterbahnen 3, z. B. in Form filmartiger Beschichtungen, aufgebracht sind. Diese bilden einerseits Anschlussbereiche 32 zum elektrischen Anschluss des Trägers 1 an eine Leiterplatte sowie weiterhin Verbindungsbereiche 34, 36 zur elektrischen Kontaktierung einer Strahlungsquelle, welche bestimmungsgemäß innerhalb des Aufnahmeraumes 23 einer Aufnahme 22 des Trägers 1 angeordnet ist.

Die Aufnahme 22 des Trägers 1 erstreckt sich im Ausführungsbeispiel der Figur 3 wiederum entlang einer Bewegungsrichtung B, die mit einer Achse der Aufnahme 22 zusammenfällt, entlang welcher eine Strahlungsquelle bestimmungsgemäß in die Aufnahme 22 einführbar und innerhalb des Aufnahmeraumes 23 bewegbar (verschiebbar) ist.

Die Aufnahme 22 ist im Ausführungsbeispiel der Figur 3 im Querschnitt (z. B. im Wesentlichen senkrecht zur Bewegungsrichtung B) rechteckförmig ausgestaltet, mit abgerundeten Ecken. Sie steht im Ausführungsbeispiel weiterhin von einem Trägerbereich 20 des Grundkörpers 2 ab, so dass sie sich entlang der Bewegungsrichtung B erstreckt.

Ein weiterer Unterschied zur Ausführungsform der Figur 2A besteht darin, dass die Verbindungsbereiche 34, 36 der trägerseitigen Leiterbahnen 3 über welche eine bestimmungsgemäß in der Aufnahme 22 angeordnete Strahlungsquelle elektrisch kontaktierbar ist, vor der Aufnahme 22 angeordnet sind, genauer in einer gedachten Verlängerung des Aufnahmeraumes 23 entlang der Bewegungsrichtung B. Die Verbindungsbereiche 34, 36 der Leiterbahnen 3 sind dabei konkret an Vorsprüngen 24, 26 vorgesehen, die, entlang der Bewegungsrichtung B, vor dem Aufnahmeraum 23 der Aufnahme 22 liegen.

Zur elektrischen Kontaktierung einer Strahlungsquelle 4, vergl. Figur 2B, sollen die Anschlusselemente in Form (stiftartiger) Anschlussbeine vorliegend im Wesentlichen geradlinig von der Rückseite 42 des Gehäuses 40 der Strahlungsquelle 4 abstehen, so dass diese bei bestimmungsgemäßer Anordnung der Strahlungsquelle 4 in der Aufnahme 22 des Trägers 1 gemäß Figur 2 an den Verbindungsbereichen 34, 36 der Leiterbahnen 3 anliegen.

Im Unterschied zur Anordnung der Figuren 2A und 2B wird beim Ausführungsbeispiel der Figur 3 die Erstreckungsrichtung der durch die Leiterbahnen 34, 36 und die zugeordneten Anschlusselemente 44, 46 der Strahlungsquelle 4 gebildeten Führung nicht in erster Linie durch die Erstreckung der Verbindungsbereiche 34, 36 vorgegeben (wie im Fall der Figuren 1A und 1B) sondern vielmehr durch die Erstreckung der von der Strahlungsquelle 4 abstehenden Anschlusselemente (Anschlussbeine) entlang der Bewegungsrichtung B.

Bei dem vorliegenden Ausführungsbeispiel bildet ein Teil 28 der Aufnahme 22 einen (durch Schlitze von angrenzenden Bereichen der Aufnahme 22 abgesetzten) radial federnden Teilbereich (Backen/Lasche), welcher auf die Strahlungsquelle 4 einen radialen Druck ausübt und diese während der Führung in Bewegungsrichtung B in der Aufnahme 22 möglichst spielfrei in Richtungen senkrecht zur Richtung B positioniert hält.

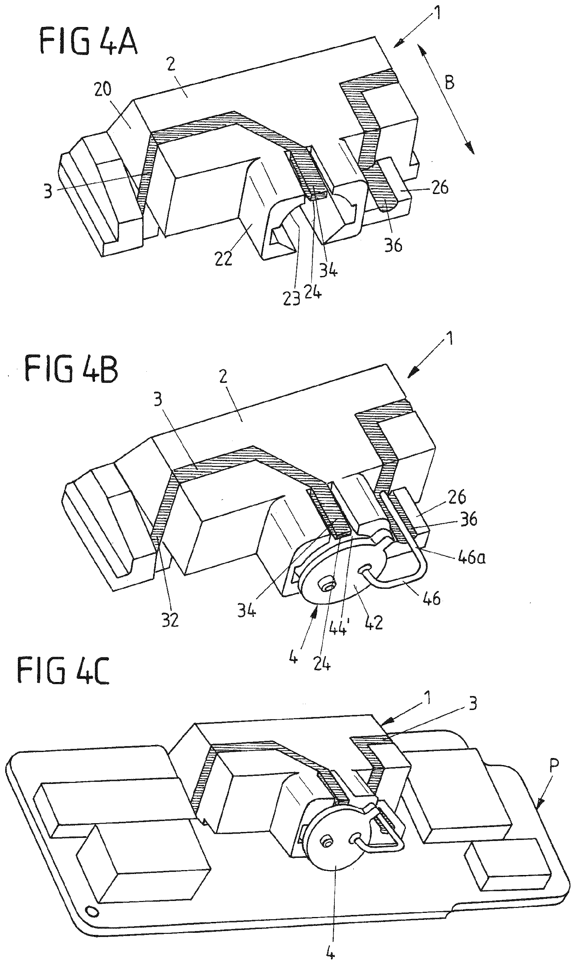

In den Figuren 4A bis 4C ist ein weiteres Ausführungsbeispiel eines mit Leiterbahnen 3 versehenen Trägers 1 (Figur 4A) dargestellt, dessen elektrisch isolierender Grundkörper 2 eine Aufnahme 22 definiert, in der eine Strahlungsquelle 4 angeordnet ist (Figur 4B), wobei die aus dem Träger 1, den Leiterbahnen 3 und der Strahlungsquelle 4 bestehende Baugruppe auf einer Leiterplatte P angeordnet und hierdurch in eine elektrische bzw. elektronische Schaltung integriert ist (Figur 4C).

Gemäß den Figuren 4A und 4B weist der Grundkörper 2 des Trägers 1 einen Trägerbereich 20 auf, von dem die Aufnahme 22 entlang einer Bewegungsrichtung B absteht. Die Aufnahme 22 ist im Ausführungsbeispiel der Figuren 4A und 4B im Querschnitt mehreckig mit abgerundeten Ecken. Sie definiert wiederum einen Aufnahmeraum 23, innerhalb dessen eine Strahlungsquelle 4 anordenbar ist, die sich entlang der Bewegungsrichtung B in die Aufnahme 22 bzw. den Aufnahmeraum 23 einführen lässt.

Zur elektrischen Kontaktierung des Strahlungsquelle 4 sowie zum elektrischen Anschluss des Trägers 1 an die Leiterplatte P sind auf dem Grundkörper 2 Leiterelemente in Form von Leiterbahnen 3 vorgesehen, die einerseits Anschlussbereiche 32 zum Anschluss an leiterplattenseitige Leiterbahnen bilden und zum anderen Verbindungsbereiche 34, 36 zur elektrischen Kontaktierung der Strahlungsquelle 4.

Von den Verbindungsbereichen 34, 36 der trägerseitigen Leiterbahnen 3 verläuft ein Verbindungsbereich 34 entlang eines Wandbereiches 24 der Aufnahme 22 und ein anderer Verbindungsbereich 36 an einem Vorsprung 26, welcher sich neben der Aufnahme 22 erstreckt, und zwar in Bewegungsrichtung B.

Zur elektrischen Kontaktierung der Strahlungsquelle 4 mit den beiden in Bewegungsrichtung B erstreckten Verbindungsbereichen 34, 36 der trägerseitigen Leiterbahnen 3 kann somit einerseits ein unmittelbar am Gehäuse 40 der Strahlungsquelle 4 liegendes Anschlusselement 44' dienen, welches bei bestimmungsgemäßer Anordnung der Strahlungsquelle 4 innerhalb des Aufnahmeraumes 23 mit dem in die Aufnahme 22 des Grundkörpers 2 integrierten Verbindungsbereich 34 der Leiterbahnen 3 in elektrischem Kontakt steht, sowie andererseits ein Kontaktelement 46 in Form eines von der Strahlungsquelle 4 abstehenden stiftartigen Verbindungsbeines, welches derart umgebogen ist, dass es sich mit einem Abschnitt 46A entlang des zugehörigen Verbindungsbereiches 36 der Leiterbahnen 3 erstreckt.

Durch die Erstreckung der seitens der Strahlungsquelle 4 zu kontaktierenden Verbindungsbereiche 34, 36 der trägerseitigen Leiterbahnen 3 entlang der Bewegungsrichtung B, entlang welcher die Strahlungsquelle 4 die Aufnahme 22 einführbar und innerhalb des Aufnahmeraumes 23 positionierbar ist, bleibt der elektrische Kontakt zwischen der Strahlungsquelle 4 und der trägerseitigen Leiterbahnen 3 während einer Bewegung bzw. Verschiebung der Strahlungsquelle 4 innerhalb der Aufnahme 22 mit dem Ziel einer definierten Positionierung der Strahlungsquelle 4 dauerhaft bestehen. Die strahlungsquellenseitigen Anschlusselemente 44', 46 und trägerseitigen Verbindungsbereiche 34, 36 der Leiterbahnen 3 bilden also wiederum eine Längsführung.

Wie im Fall des Ausführungsbeispiels der Figuren 2A und 2B kann auch im Fall der Figuren 3 sowie der Figuren 4A bis 4C eine Fixierung der Strahlungsquelle 4 in einer zuvor eingestellten Position dadurch erfolgen, dass die Anschlusselemente 44', 46 der Strahlungsquelle 4 an den zugehörigen Verbindungsbereichen 34, 36 der trägerseitigen Leiterbahnen 3 festgelegt werden, z. B. durch Löten, insbesondere Laserlöten, Kleben oder sonstige stoffschlüssige Verwendungsverfahren.

## Patentansprüche

1. Abtastbaugruppe eines Positionsmesssystems, mit
- einer Strahlungsquelle (4) zur Erzeugung einer elektromagnetischen Strahlung, mittels der eine Maßverkörperung (50) des Positionsmesssystems abtastbar ist,
- einem Träger (1) der Strahlungsquelle (4), an dem die Strahlungsquelle (4) festlegbar ist und der elektrische Leiterelemente (3) zur elektrischen Kontaktierung der Strahlungsquelle (4) aufweist, und
- elektrischen Anschlusselementen (44, 46) der Strahlungsquelle (4), über die die Strahlungsquelle (4) mit den Leiterelementen (3) des Trägers (1) in elektrischem Kontakt steht,
**dadurch gekennzeichnet,**
**dass** die Leiterelemente (3) des Trägers (1) und die Anschlusselemente (44, 46) der Strahlungsquelle (4) eine Führung bilden, an der die Strahlungsquelle (4) vor ihrer Festlegung an dem Träger (1) unter Beibehaltung des elektrischen Kontaktes zwischen der Strahlungsquelle (4) und den Leiterelementen (3) entlang einer Verstellbahn (B) bezüglich des Trägers (1) bewegbar ist, um die Strahlungsquelle (4) in unterschiedlichen Positionen entlang jener Verstellbahn (B) an dem Träger (1) anordnen zu können, in denen die Strahlungsquelle (4) jeweils in elektrischem Kontakt mit den Leiterelementen (3) steht, wobei
die Führung mindestens eine Leiterbahn (34, 36) und ein zugehöriges elektrisches Kontaktelement (44, 46) aufweist, die entlang der Verstellbahn (B) zueinander verschieblich sind und dabei in elektrischem Kontakt miteinander stehen, so dass die Strahlungsquelle (4) in unterschiedlichen Relativpositionen bezüglich des Trägers (1) elektrisch kontaktiert ist.

2. Abtastbaugruppe nach Anspruch 1, **dadurch gekennzeichnet, dass** die Führung zwei entlang der Verstellbahn (B) erstreckte Leiterbahnen (34, 36) und zugeordnete elektrische Kontaktelemente (44, 46) aufweist.

3. Abtastbaugruppe nach Anspruch 1 oder 2, **dadurch gekennzeichnet, dass** die mindestens eine Leiterbahn (34, 36) als elektrisches Leiterelement an dem Träger (1) vorgesehen ist und dass das jeweils zugehörige elektrische Kontaktelement als Anschlusselement (44, 46) an der Strahlungsquelle (4) vorgesehen ist.

4. Abtastbaugruppe nach einem der vorherigen Ansprüche, **dadurch gekennzeichnet, dass** die Führung ausgebildet ist für eine geradlinig geführte Bewegung der Strahlungsquelle (4).

5. Abtastbaugruppe nach Anspruch 4, **dadurch gekennzeichnet, dass** die zur elektrischen Kontaktierung der Strahlungsquelle (4) dienenden Verbindungsabschnitte (34, 36) der Leiterelemente (3) und/oder das jeweils zugeordnete Anschlusselement (44, 46) geradlinig erstreckt sind.

6. Abtastbaugruppe nach einem der vorherigen Ansprüche, **dadurch gekennzeichnet, dass** mindestens ein Anschlusselement (44, 46) der Strahlungsquelle (4) durch ein von der Strahlungsquelle (4) abstehendes Anschlussbein gebildet wird.

7. Abtastbaugruppe nach einem der vorherigen Ansprüche, **dadurch gekennzeichnet, dass** mindestens ein Anschlusselement (44') der Strahlungsquelle (4) am Gehäuse (40) der Strahlungsquelle (4) ausgebildet ist.

8. Abtastbaugruppe nach einem der vorherigen Ansprüche, **dadurch gekennzeichnet, dass** der Träger (1) eine Aufnahme (22) aufweist, an der die Strahlungsquelle (4) angeordnet und entlang der Verstellbahn (B) bewegbar ist.

9. Abtastbaugruppe nach Anspruch 8, **dadurch gekennzeichnet, dass** sich Verbindungsbereiche (34, 36) der trägerseitigen Leiterelemente (3), die der elektrischen Kontaktierung der Strahlungsquelle (4) über deren Anschlusselemente (44, 46) dienen, neben der Aufnahme (22) erstrecken.

10. Abtastbaugruppe nach Anspruch 8, **dadurch gekennzeichnet, dass** sich Verbindungsbereiche (34, 36) der trägerseitigen Leiterelemente (3), die der elektrischen Kontaktierung der Strahlungsquelle (4) über deren Anschlusselemente (44, 46) dienen, vor der Aufnahme (22) erstrecken.

11. Abtastbaugruppe nach einem der vorherigen Ansprüche, **dadurch gekennzeichnet, dass** zur Festlegung der Strahlungsquelle (4) an dem Träger (1) die Anschlusselemente (44, 46) stoffschlüssig mit Verbindungsbereichen (34, 36) der trägerseitigen elektrischen Leiterelemente (3) verbunden sind.

12. Abtastbaugruppe nach einem der vorherigen Ansprüche, **dadurch gekennzeichnet, dass** der Träger (1) einen aus einem elektrisch isolierenden Material bestehenden Grundkörper (2) aufweist, auf dem sich die Leiterelemente (3) als Leiterbahnen erstrecken.

13. Abtastbaugruppe nach einem der vorherigen Ansprüche, **dadurch gekennzeichnet, dass** der Strahlungsquelle (4) eine Linse (6) zugeordnet ist, um die von der Strahlungsquelle (4) ausgesandte elektromagnetische Strahlung zu kollimieren, und dass der für die Kollimation erforderliche Abstand zwischen Strahlungsquelle (4) und Linse (6) durch Bewegen der Strahlungsquelle (4) bezüglich des Trägers (1) entlang der Verstellbahn (B) einstellbar ist.

## Claims

1. Scanning assembly of a position measuring system, comprising
- a radiation source (4) for producing electromagnetic radiation, by means of which a scale (50) of the position measuring system is scannable,
- a holder (1) of the radiation source (4), to which the radiation source (4) is affixable and which comprises electrical conductor elements (3) for electrical contacting of the radiation source (4), and
- electrical connection elements (44, 46) of the radiation source (4), by means of which the radiation source (4) is in electrical contact with the conductor elements (3) of the holder (1),
**characterized**
**in that** the conductor elements (3) of the holder (1) and the connection elements (44, 46) of the radiation source (4) form a guide, along which the radiation source (4), prior to the affixment thereof on the holder (1), is movable along an adjustment trajectory (B) with respect to the holder (1) while retaining the electrical contact between the radiation source (4) and the conductor elements (3) in order to be able to arrange the radiation source (4) on the holder (1) at different positions along that adjustment trajectory (B), in which the radiation source (4) in each case has electrical contact with the conductor elements (3), wherein the guide comprises at least one conductor track (34, 36) and an associated electrical contact element (44, 46) which are displaceable in relation to one another along the adjustment trajectory (B) and, in the process, are in electrical contact with one another such that the radiation source (4) is electrically contacted in different relative positions in relation to the holder (1).

2. Scanning assembly according to Claim 1, **characterized in that** the guide has two conductor tracks (34, 36) that extend along the adjustment trajectory (B) and assigned electrical contact elements (44, 46).

3. Scanning assembly according to Claim 1 or 2, **characterized in that** the at least one conductor track (34, 36) is provided as an electrical conductor element at the holder (1) and **in that** the respectively associated electrical contact element is provided as a connection element (44, 46) at the radiation source (4).

4. Scanning assembly according to any one of the preceding claims, **characterized in that** the guide is embodied for the straight-line guided movement of the radiation source (4).

5. Scanning assembly according to Claim 4, **characterized in that** the connection sections (34, 36) of the conductor elements (3) serving for the electrical contacting of the radiation source (4) and/or the respectively assigned connection element (44, 46) extend in a straight line.

6. Scanning assembly according to any one of the preceding claims, **characterized in that** at least one connection element (44, 46) of the radiation source (4) is formed by a connection pin that protrudes from the radiation source (4).

7. Scanning assembly according to any one of the preceding claims, **characterized in that** at least one connection element (44') of the radiation source (4) is embodied on the casing (40) of the radiation source (4).

8. Scanning assembly according to any one of the preceding claims, **characterized in that** the holder (1) has a receptacle (22) on which the radiation source (4) is arranged and movable along the adjustment trajectory (B).

9. Scanning assembly according to Claim 8, **characterized in that** connection regions (34, 36) of the holder-side conductor elements (3) which serve for the electrical contacting of the radiation source (4) by way of the connection elements (44, 46) thereof extend next to the receptacle (22).

10. Scanning assembly according to Claim 8, **characterized in that** connection regions (34, 36) of the holder-side conductor elements (3) which serve for the electrical contacting of the radiation source (4) by way of the connection elements (44, 46) thereof extend in front of the receptacle (22).

11. Scanning assembly according to any one of the preceding claims, **characterized in that** the connection elements (44, 46) are cohesively connected to connection regions (34, 36) of the holder-side electrical conductor elements (3) for the purposes of affixing the radiation source (4) to the holder (1).

12. Scanning assembly according to any one of the preceding claims, **characterized in that** the holder (1) comprises a main body (2) that consists of an electrically insulating material, on which the conductor elements (3) extend as conductor tracks.

13. Scanning assembly according to any one of the preceding claims, **characterized in that** a lens (6) is assigned to the radiation source (4) for the purposes of collimating the electromagnetic radiation emitted by the radiation source (4) and **in that** the distance between the radiation source (4) and the lens (6) that is required for the collimation is adjustable by moving the radiation source (4) along the adjustment trajectory (B) in relation to the holder (1).

## Revendications

1. Module de détection d'un système de mesure de la position, comprenant :
- une source de rayonnement (4) destinée à la génération d'un rayonnement électromagnétique, au moyen duquel un mètre (50) du système de mesure de la position peut être détecté ;
- un support (1) de la source de rayonnement (4), au niveau duquel la source de rayonnement (4) peut être déterminée et lequel présente des éléments conducteurs (3) électriques qui sont destinés à la mise en contact électrique de la source de rayonnement (4) ; et
- des éléments de connexion (44, 46) électriques de la source de rayonnement (4), par l'intermédiaire desquels la source de rayonnement (4) se trouve en contact électrique avec les éléments conducteurs (3) du support (1),
**caractérisé en ce que**
les éléments conducteurs (3) du support (1) et les éléments de connexion (44, 46) de la source de rayonnement (4) forment un guidage, au niveau duquel la source de rayonnement (4) peut, avant sa détermination au niveau du support (1), être déplacée le long d'une trajectoire d'ajustement (B) par rapport au support (1), tout en conservant le contact électrique entre la source de rayonnement (4) et les éléments conducteurs (3), ce afin de pouvoir disposer la source de rayonnement (4) dans différentes positions le long de ladite trajectoire d'ajustement (B) au niveau du support (1), positions dans lesquelles la source de rayonnement (4) se trouve respectivement en contact électrique avec les éléments conducteurs (3), le guidage présentant au moins une piste conductrice (34, 36) et un élément formant contact (44, 46) électrique qui lui est associé, lesquels peuvent coulisser l'un par rapport à l'autre le long de la trajectoire d'ajustement (B) et lesquels se trouvent en outre en contact électrique l'un avec l'autre, de telle sorte que la source de rayonnement (4) est mise en contact de manière électrique dans différentes positions relatives par rapport au support (1).

2. Module de détection selon la revendication 1, **caractérisé en ce que** le guidage présente deux pistes conductrices (34, 36) qui sont étendues le long de la trajectoire d'ajustement (B), ainsi que des éléments formant contact (44, 46) électrique qui leur sont associés.

3. Module de détection selon la revendication 1 ou 2, **caractérisé en ce que** l'au moins une piste conductrice (34, 36) est prévue sous la forme d'un élément conducteur électrique se trouvant au niveau du support (1) et **caractérisé en ce que** l'élément formant contact électrique qui lui est respectivement associé est prévu sous la forme d'un élément de connexion (44, 46) au niveau de la source de rayonnement (4).

4. Module de détection selon l'une des revendications précédentes, **caractérisé en ce que** le guidage est conçu pour un déplacement à guidage rectiligne de la source de rayonnement (4).

5. Module de détection selon la revendication 4, **caractérisé en ce que** les sections de connexion (34, 36) des éléments conducteurs (3) servant à la mise en contact électrique de la source de rayonnement (4) et/ou l'élément de connexion (44, 46) qui lui est respectivement associé sont étendus de manière rectiligne.

6. Module de détection selon l'une des revendications précédentes, **caractérisé en ce qu'**au moins un élément de connexion (44, 46) de la source de rayonnement (4) est formé par une patte de raccordement faisant saillie de la source de rayonnement (4).

7. Module de détection selon l'une des revendications précédentes, **caractérisé en ce qu'**au moins un élément de connexion (44') de la source de rayonnement (4) est conçu au niveau du boîtier (40) de la source de rayonnement (4).

8. Module de détection selon l'une des revendications précédentes, **caractérisé en ce que** le support (1) présente un logement (22), au niveau duquel la source de rayonnement (4) est disposée et peut être déplacée le long de la trajectoire d'ajustement (B).

9. Module de détection selon la revendication 8, **caractérisé en ce que** des zones de connexion (34, 36) des éléments conducteurs (3) qui se trouvent du côté du support et qui servent à la mise en contact électrique de la source de rayonnement (4) par l'intermédiaire de leurs éléments de connexion (44, 46), s'étendent à proximité du logement (22).

10. Module de détection selon la revendication 8, **caractérisé en ce que** des zones de connexion (34, 36) des éléments conducteurs (3) qui se trouvent du côté du support et qui servent à la mise en contact électrique de la source de rayonnement (4) par l'intermédiaire de leurs éléments de connexion (44, 46), s'étendent devant le logement (22).

11. Module de détection selon l'une des revendications précédentes, **caractérisé en ce que** les éléments de connexion (44, 46) sont reliés par combinaison de matière avec les zones de connexion (34, 36) des éléments conducteurs (3) électriques qui se trouvent du côté du support, en vue de la détermination de la source de rayonnement (4) au niveau du support (1).

12. Module de détection selon l'une des revendications précédentes, **caractérisé en ce que** le support (1) présente un corps de base (2), lequel est constitué d'un matériau électrique isolant et sur lequel s'étendent les éléments conducteurs (3) qui se présentent sous la forme de pistes conductrices.

13. Module de détection selon l'une des revendications précédentes, **caractérisé en ce qu'**une lentille (6) est associée à la source de rayonnement (4) en vue de collimater le rayonnement électromagnétique émis par la source de rayonnement (4) et **en ce que** la distance qui est requise pour la collimation et qui existe entre la source de rayonnement (4) et la lentille (6) peut être réglée en déplaçant la source de rayonnement (4) par rapport au support (1) le long de la trajectoire d'ajustement (B).
